# EUROPEAN PATENT SPECIFICATION

(11) **EP 2 926 931 B1**
(45) Date of publication and mention of the grant of the patent: **15.11.2017**
(21) Application number: 14187161.6
(22) Date of filing: 30.09.2014
(51) Int. Cl.: B23B 31/117

(54) **Tool holder using shape memory alloy**
Werkzeughalter mit Formspeicherlegierung
Porte-outil utilisant un alliage à mémoire de forme

(30) Priority: 26.03.2014 KR 20140035057
(43) Date of publication of application: 07.10.2015
(73) Proprietor: Korea Institute Of Machinery & Materials, Yuseong-gu Daejeon 305-343 (KR)
(72) Inventor: Park, Jong-Kweon, Daejeon 305-343 (KR); Lee, Sung-Cheul, Daejeon 305-343 (KR); Kim, Byung-Sub, Daejeon 305-343 (KR); Ro, Seung-Kook, Deajeon 305-343 (KR); Jang, Sung-Kwon, Daejeon 305-343 (KR)
(74) Representative: Delorme, Nicolas

(56) References cited:
- DE-C1- 4 232 790
- DE-C1- 19 860 254
- JP-A- S62 199 306
- JP-A- 2005 074 603
- KR-B1- 100 784 801
- US-A1- 2002 071 728
- US-A1- 2012 237 309

## Description

### BACKGROUND OF THE INVENTION

### (a) Field of the Invention

The present invention relates to a tool holder using a shape memory alloy, as per the preambles of independent claims 1 and 2. Such a tool holder is known from document KR 100784801 B. More particularly, the present invention relates to a tool holder using a shape memory alloy, characterized in that durability is improved by configuring a reinforcing portion having a tapered shape or a two-dimensional curved line shape, a speed in response to an operation of clamping and unclamping a shape memory alloy ring is improved by a high thermal diffusion speed caused by a fine pattern, and axial tightening force of the shape memory alloy ring is improved by a spacer and a locking cap.

### (b) Description of the Related Art

In general, a tool holder serves to fasten and fix a tool such as a drill that is disposed on a main shaft of a machine tool and machines a workpiece.

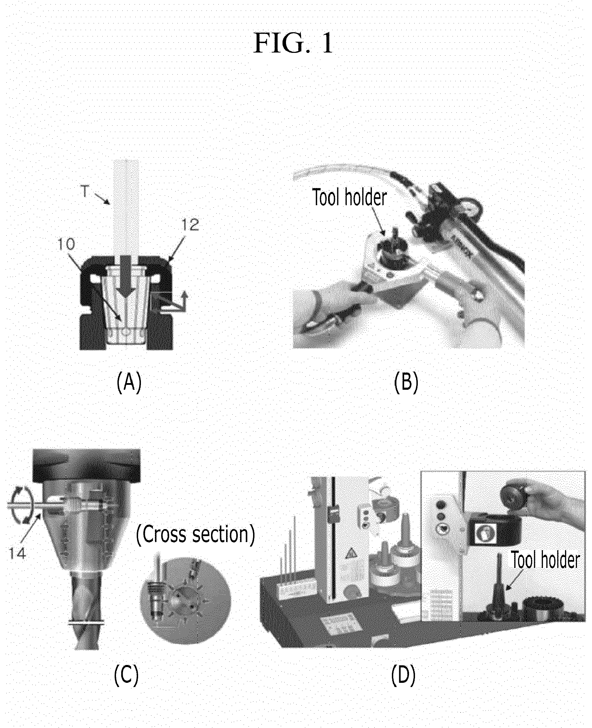

The tool holders in the related art mainly work in a way such as using a tapered collet chuck method as illustrated in FIG. 1 (a), in which a tool (T) is inserted into a tapered collet 10, and force is axially applied to the tool by a collet nut 12 such that the inserted tool is fastened by providing a radial component of force to the tool from a tapered surface; in a way such as using a hydraulic chuck method as illustrated in FIG. 1 (b) and (c), in which a hydraulic chamber is configured in a tool holder, and an inner surface of a tool insertion opening is elastically deformed by hydraulic pressure so as to fasten the inserted tool; or in a way such as a shrink fit method as illustrated in FIG. 1 (d), in which a tool is inserted into a tool mounting portion that is thermally expanded by applying high-temperature heat to the tool mounting portion, and the tool is fastened using stress caused by interference between the tool mounting portion, which is restored to an original shape at room temperature, and a tool shank portion.

However, the related art has the following problems.

Firstly, according to the tool holder using the tapered collet chuck method, since a separate device such as a spring or a collet nut, which applies axial force, needs to be mounted to the main shaft, together with the tapered collet, there are problems in that an overall structure of the tool holder becomes complicated, a precise machining and assembling technology is thus required, and form errors of the tapered collet are accumulated such that geometric tool set-up errors are increased.

Secondly, according to the tool holder using the hydraulic chuck method, as illustrated in FIG. 1 (b), since a separate pressing system is required in a case in which the tool is clamped by using high pressure, there are problems in that a configuration of the entire system becomes complicated, and expense is increased.

Thirdly, according to the tool holder using the shrink fit method, since the tool is replaced by applying high-temperature heat, the tool replacement needs to be performed by separating the tool holder from the main shaft and then moving the tool holder to a separate heating system, and as a result, there are problems in that a configuration of the entire system becomes complicated, and expense is increased because a heating device and the like are provided.

In addition, since it takes about 1 to 2 minutes to heat the tool holder to a high temperature in order to unclamp the tool, a lot of time is needed to replace the tool, which results in deterioration of work productivity.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a tool holder using a shape memory alloy (SMA), which may simplify a structure and reduce a size by clamping a tool using the shape memory alloy.

The present invention has also been made in an effort to provide a tool holder using a shape memory alloy, which may reinforce moment strength and rigidity of a tool holder, and which is installed in the form of a cantilever, by configuring a reinforcing portion having a tapered shape or a two-dimensional curved line shape to a holder body.

The present invention has also been made in an effort to provide a tool holder using a shape memory alloy, which may shorten a time required to clamp and unclamp a tool in accordance with a thermal diffusion speed when the shape memory alloy is cooled or heated, by increasing a surface area by forming at least a fine pattern on a surface of the shape memory alloy.

The present invention has also been made in an effort to provide a tool holder using a shape memory alloy, which may increase axial tightening force of a shape memory alloy ring by a spacer and a locking cap.

An exemplary embodiment of the present invention according to independent claim 1 provides a tool holder using a shape memory alloy, including: a holder body including: a coupling portion at a rear side which is coupled to a chuck means; a clamping portion at a front side which has a bore into which a shank portion of a tool is inserted, a plurality of slits formed on an external circumferential surface of the clamping portion, communicating with the bore, and arranged in a circumferential direction, and an external thread portion formed on a tip portion of the external circumferential surface; and a reinforcing portion in which an axial shape of an external circumferential surface between the coupling portion and the clamping portion has any one shape of a tapered shape, a two-dimensional curved line shape, and a horizontal line shape; a shape memory alloy ring which tightens or loosens the clamping portion in a radial direction of the axis while being heated or cooled in a state in which the shape memory alloy ring is fitted on the slits of the clamping portion; a spacer which is interposed between the reinforcing portion of the clamping portion and the shape memory alloy ring; and a locking cap which is thread-coupled to the external thread portion of the clamping portion by an internal thread formed on an inner circumferential surface and prevents the shape memory alloy ring from being moved away.

Another exemplary embodiment of the present according to independent claim 2 provides a tool holder using a shape memory alloy, including: a holder body including: a coupling portion at a rear side which is coupled to a chuck means; a clamping portion at a front side which has a bore into which a shank portion of a tool is inserted, a plurality of slits formed on an external circumferential surface of the clamping portion, communicating with the bore, and arranged in a circumferential direction and a longitudinal direction, and an external thread portion formed on a tip portion of the external circumferential surface; and a reinforcing portion in which an axial shape of an external circumferential surface between the coupling portion and the clamping portion has any one shape of a tapered shape, a two-dimensional curved line shape, and a horizontal line shape; a plurality of shape memory alloy rings which tighten or loosen the clamping portion in a radial direction of the axis while being heated or cooled in a state in which the shape memory alloy ring is fitted on the respective slits formed in a longitudinal direction of the clamping portion; spacers which include a side spacer interposed between the reinforcing portion of the clamping portion and the shape memory alloy ring, and one or a plurality of middle spacers interposed between the shape memory alloy rings; and a locking cap which is thread-coupled to the external thread portion of the clamping portion by an internal thread formed on an inner circumferential surface and prevents the shape memory alloy ring from being moved away.

A fine pattern for enlarging a surface area may be randomly formed on a surface of the shape memory alloy ring.

Fine patterns for enlarging surface areas may be randomly formed on surfaces of the spacer and the locking cap.

The fine pattern may be formed by a processing means such as a laser or an abrasive air jet (AAJ).

A tool groove, which is used to tighten and loosen the locking cap using a tool, may be formed in an outer end surface of the locking cap.

A stepped portion may be formed at a rear side of the shank portion, and a catching projection, by which the stepped portion is caught, may be formed in the bore.

The locking cap may be thread-coupled to the clamping portion in a direction opposite to a direction in which the holder body is rotated.

According to the present invention as described above, a structure of the tool holder may be simplified and a size of the tool holder may be reduced by clamping the tool using the shape memory alloy.

In addition, since the present invention has the reinforcing portion having a tapered shape or a two-dimensional curved line shape without greatly enlarging the outer diameter of the holder body, moment strength and rigidity of the cantilever-shaped tool holder may be reinforced, and as a result, a lifespan of the tool holder and machining precision at the time of a machining process may be improved.

The present invention may shorten a time required to clamp and unclamp the tool by at least forming the fine pattern on the surface of the shape memory alloy ring, and allowing the thermal diffusion speed to become high when the shape memory alloy ring is cooled or heated.

The present invention may prevent the shape memory alloy ring from being moved away without permission, by increasing axial tightening force of the shape memory alloy ring by the spacer and the locking cap.

### BRIEF DESCRIPTION OF THE DRAWINGS

FIG. 1(a) to (d) are schematic diagrams illustrating a tool holder according to the related art.
FIG. 2 is an exploded perspective view of a tool holder according to a first exemplary embodiment of the present invention.
FIG. 3 is a coupled perspective view of the tool holder according to the first exemplary embodiment of the present invention.
FIG. 4 is a coupled cross-sectional view of the tool holder according to the first exemplary embodiment of the present invention.
FIG. 5 is a graph for comparing thermal diffusion speeds according to whether or not a fine pattern is present and a size of the fine pattern.
FIG. 6 is an exploded perspective view of a tool holder according to a second exemplary embodiment of the present invention.
FIG. 7 is a coupled perspective view of the tool holder according to the second exemplary embodiment of the present invention.
FIG. 8 is a coupled cross-sectional view of the tool holder according to the second exemplary embodiment of the present invention.
FIG. 9 is a coupled cross-sectional view of a tool holder according to a third exemplary embodiment of the present invention.

### DETAILED DESCRIPTION OF THE EMBODIMENTS

An exemplary embodiment of the present invention will now be described.

The technical terms used herein are merely for the purpose of describing a specific exemplary embodiment, and not intended to limit the present invention. Singular expressions used herein include plural expressions unless defined to the contrary. The terms "comprises" and/or "comprising" used in the specification specify particular features, regions, integers, steps, operations, elements, components, but do not preclude the presence or addition of other particular features, regions integers, steps, operations, elements, components, and/or groups thereof.

All terms used herein including technical or scientific terms have the same meanings as those generally understood by a person skilled in the art unless they are differently defined. Terms defined in a generally used dictionary shall be construed such that they have meanings matching those in the context of a related art, and shall not be construed in ideal or excessively formal meanings unless they are clearly defined in the present application.

### [First Exemplary Embodiment]

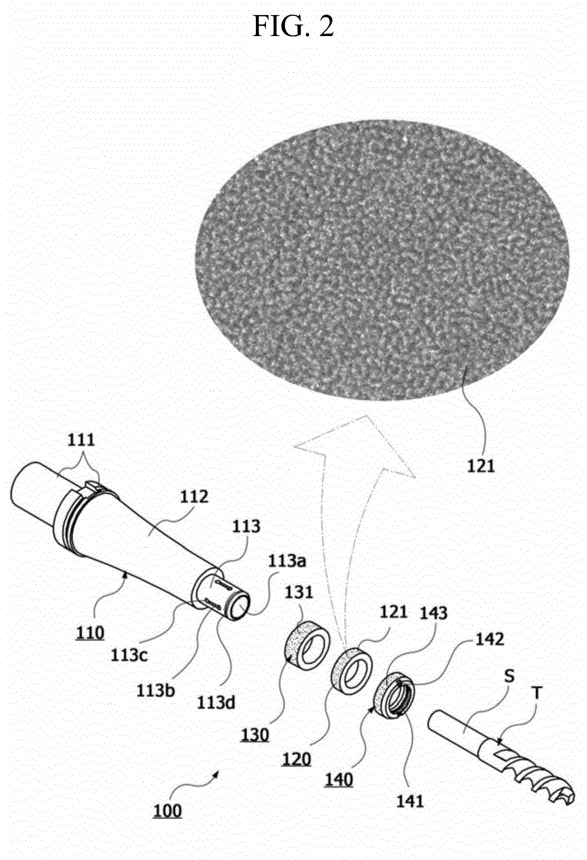

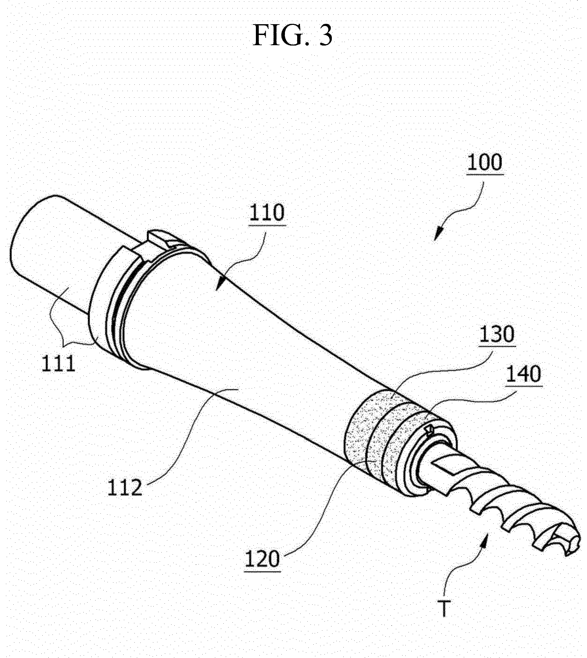

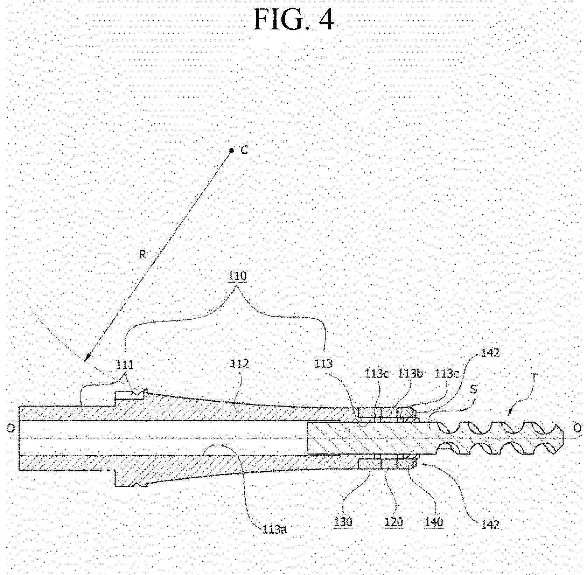

FIG. 2 is an exploded perspective view of a tool holder according to a first exemplary embodiment of the present invention, FIG. 3 is a coupled perspective view of the tool holder according to the first exemplary embodiment of the present invention, and FIG. 4 is a coupled cross-sectional view of the tool holder according to the first exemplary embodiment of the present invention.

Referring to the above FIGS. 2 to 4, a tool holder 100 according to a first exemplary embodiment of the present invention includes a holder body 110, a shape memory alloy ring 120, a spacer 130, and a locking cap 140, and is rotated while being coupled to a chuck means.

The holder body 110 has a cylindrical shape, a coupling portion 111 which is coupled to the chuck means (not illustrated) such as a collet chuck is formed at a rear side of the holder body 110, a clamping portion 113 which clamps a shank portion S of a tool T is formed at a front side of the holder body 110, and a reinforcing portion 112 which reinforces the holder body 110 that is installed in the form of a cantilever is formed between the coupling portion 111 and the clamping portion 113.

The reinforcing portion 112 has a thickness that is greater than those of other portions, and an external circumferential surface having an axial shape that is a tapered shape or a two-dimensional curved line shape has a radius R, such that the reinforcing portion 112 has a shape for dispersing stress. Therefore, moment strength and axial rigidity of the holder body 110 which is installed in the form of a cantilever may be reinforced, and as a result, durability of the holder body 110 and machining precision at the time of a machining process may be improved.

On the contrary, an axial shape of an external circumferential surface of the reinforcing portion 112 may be a horizontal line shape.

The clamping portion 113 has a bore 113a into which the shank portion S of the tool T is inserted, and a plurality of slits 113b which communicate with the bore 113a are formed on an external circumferential surface of the clamping portion 113 so as to be arranged in a circumferential direction. Here, circular holes 113c are formed at both end portions of the slit 113b, such that the occurrence of cracks at both end portions may be prevented even if the slit 113b is deformed while being repeatedly contracted and restored.

According to the aforementioned configuration, when portions of the slits 113b are tightened, a diameter of the bore 113a is reduced as the clamping portion 113 is compressed and deformed in a direction of a central axis O, such that the tool T fitted into the bore 113a may be clamped.

Further, an external thread portion 113d is formed on a tip portion of the external circumferential surface of the clamping portion 113. The external thread portion 113d is configured to be coupled to the locking cap 140.

The shape memory alloy ring 120 serves to tighten the clamping portion 113, and tightens or loosens the clamping portion, particularly, the portion where the slits 113b are formed, in a radial direction of the axis while being heated or cooled in a state in which the shape memory alloy ring 120 is fitted on the slits 113b of the clamping portion 113.

For reference, the shape memory alloy ring 120 is contracted and released in accordance with a change in temperature. That is, when a temperature of the shape memory alloy ring 120 is raised to a final austenite transformation temperature by a heating means, a nominal diameter of the shape memory alloy ring 120 is reduced to tighten the portion of the slit 113b of the clamping portion 113, and as a result, the shank portion S of the tool T, which is fitted into the shape memory alloy ring 120, is clamped.

On the contrary, when the shape memory alloy ring 120 is cooled to a temperature of equal to or less than a start temperature of martensite transformation by a cooling means, little elastic force remains, and the nominal diameter of the shape memory alloy ring 120 is enlarged and restored to an original state, such that tightening force is removed. Accordingly, clamping force to the shank portion S of the tool T is lost.

Here, a fine pattern 121 may be randomly formed on a surface of the shape memory alloy ring 120 utilizing a kind of surface treatment (surface texturing) by a processing means such as a laser or an abrasive air jet (AAJ), for example.

The reason why the fine pattern 121 is formed is that when the shape memory alloy ring 120 is heated or cooled by the heating means or the cooling means as described above, a surface area is increased because of the fine pattern 121, such that a thermal diffusion speed is increased, thereby improving heating and cooling efficiency. Accordingly, an operation of clamping and unclamping the shape memory alloy ring 120 may be quickly performed.

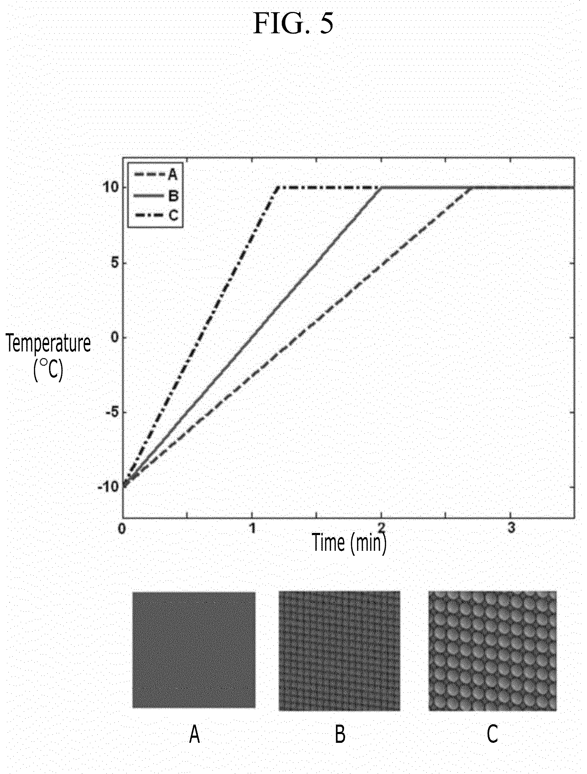

In this regard, FIG. 5 illustrates a graph for comparing thermal diffusion speeds according to whether or not the fine pattern 121 is present, and unit pattern sizes. As illustrated in FIG. 5, it can be seen that when a unit size of the pattern is 100 µm or 50 µm, a temperature gradient (slope) is increased, and when there is no pattern, a temperature gradient (slope) is decreased. It can be seen from this that the thermal diffusion speed is higher when there is the fine pattern than when there is no fine pattern.

The spacer 130 fills a gap between the shape memory alloy ring 120 and the reinforcing portion 112, and serves to prevent the shape memory alloy ring 120 from being moved away from its position. In addition, the spacer 130 exhibits a design effect of allowing an external appearance of the tool holder 100 to be smooth and simple.

The locking cap 140 is thread-coupled to the external thread portion 113d of the clamping portion 113 by an internal thread 141 formed on an inner circumferential surface of the locking cap 140 so as to prevent the shape memory alloy ring 120 from being moved away to the outside of the clamping portion 113. In addition, like the spacer 130, the locking cap 140 also exhibits a design effect of allowing an external appearance of the tool holder 100 to be smooth and simple.

Further, a tool groove 142, which is used to tighten and loosen the locking cap using a tool, may be formed in an outer end surface of the locking cap 140.

In addition, the locking cap 140 may be thread-coupled to the clamping portion 113 in a direction opposite to a direction in which the holder body 110 is rotated. The reason is that when the direction in which the locking cap 140 is thread-coupled to the clamping portion 113 is the same as the direction in which the holder body 110 is rotated, the thread engagement therebetween may be released, but this may be prevented by the aforementioned configuration.

Meanwhile, fine patterns 131 and 143 may also be formed on surfaces of the spacer 130 and the locking cap 140. The reason is that the spacer 130 and the locking cap 140 are directly or indirectly in close contact with the shape memory alloy ring 120, which may affect the thermal diffusion speed of the shape memory alloy ring 120. Sizes of the fine patterns are the same as the size as described above.

### [Second Exemplary Embodiment]

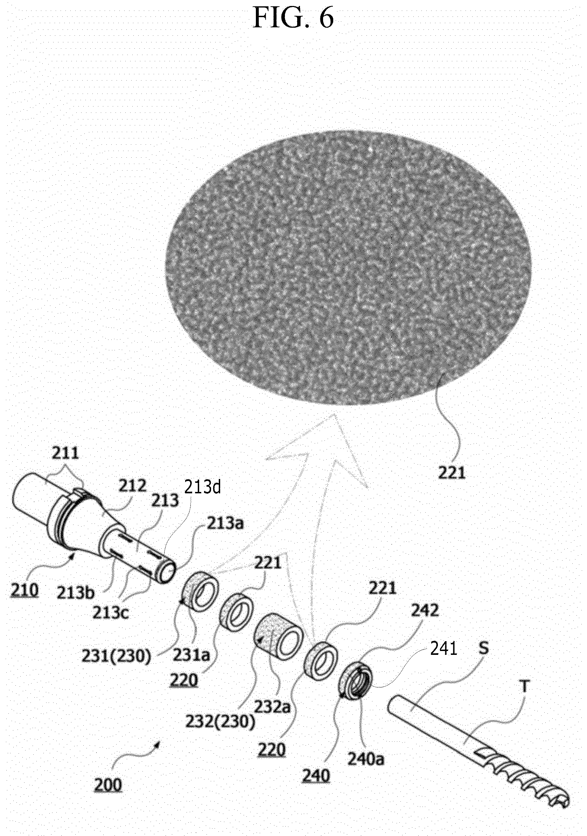

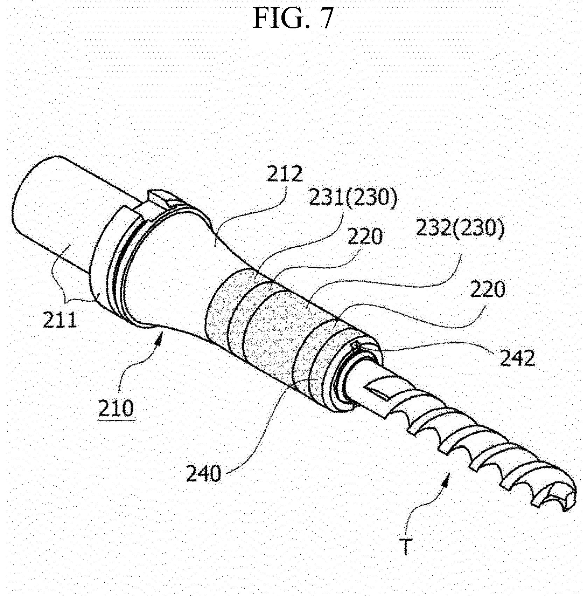

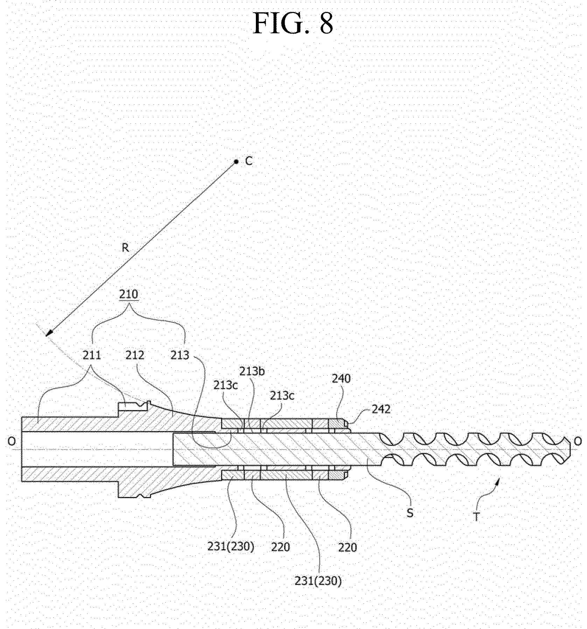

FIG. 6 is an exploded perspective view of a tool holder according to a second exemplary embodiment of the present invention, FIG. 7 is a coupled perspective view of the tool holder according to the second exemplary embodiment of the present invention, and FIG. 8 is a coupled cross-sectional view of the tool holder according to the second exemplary embodiment of the present invention.

The second exemplary embodiment is different from the first exemplary embodiment in that a plurality of shape memory alloy rings and a plurality of spacers are installed. Hereinafter, the different configuration of the second exemplary embodiment will be specifically described, and a duplicated description will be omitted.

Referring to the above FIGS. 6 to 8, a tool holder 200 according to a second exemplary embodiment of the present invention includes a holder body 210, shape memory alloy rings 220, spacers 230, and a locking cap 240, and is rotated while being coupled to a chuck means.

The holder body 210 has a cylindrical shape, a coupling portion 211 which is coupled to the chuck means (not illustrated) such as a collet chuck is formed at a rear side of the holder body 210, a clamping portion 213 which clamps a shank portion S of a tool T is formed at a front side of the holder body 210, and a reinforcing portion 212 which reinforces the holder body 210 that is installed in the form of a cantilever is formed between the coupling portion 211 and the clamping portion 213.

The reinforcing portion 212 has a thickness that is greater than those of other portions, and an external circumferential surface of the reinforcing portion 212 has a tapered shape or a two-dimensional curved line shape having a radius R in an axial direction, such that the reinforcing portion 212 has a shape for dispersing stress. Therefore, moment strength and axial rigidity of the holder body 210, which is installed in the form of a cantilever, may be reinforced, and as a result, durability of the holder body 210 and machining precision at the time of a machining process may be improved.

Here, since the clamping portion 213 becomes long, a length of the reinforcing portion 212 of the second exemplary embodiment may be shorter than a length of the reinforcing portion of the first exemplary embodiment. In addition, unlike the aforementioned form, an axial shape of an external circumferential surface of the reinforcing portion 212 may be a horizontal line shape.

The clamping portion 213 has a bore 213a into which the shank portion S of the tool T is inserted, and a plurality of slits 213b which communicate with the bore 213a are formed on an external circumferential surface of the clamping portion 213 so as to be arranged in a circumferential direction and a longitudinal direction. Here, circular holes 213c are formed at both end portions of each of the slit 213b, such that the occurrence of cracks at both end portions may be prevented even if the slit 213b is deformed while being repeatedly contracted and restored.

According to the aforementioned configuration, when portions of the slits 213b are tightened, a diameter of the bore 213a is reduced as the clamping portion 213 is compressed and deformed in a direction of a central axis O, such that the tool T fitted into the bore 213a may be clamped.

Further, an external thread portion 213d is formed on a tip portion of the external circumferential surface of the clamping portion 213. The external thread portion 213d is configured to be coupled to the locking cap 240.

The plurality of shape memory alloy rings 220 serve to tighten the clamping portion 213, and tighten or loosen the clamping portion, particularly, the portion where the slits 213b are formed, in the direction of the central axis O while being heated or cooled in a state in which the shape memory alloy rings 220 are fitted on the respective slits 213b arranged in a longitudinal direction of the clamping portion 213.

Meanwhile, a fine pattern 221 may be randomly formed on a surface of the shape memory alloy ring 220 utilizing a kind of surface treatment (surface texturing) by a processing means such as a laser or an abrasive air jet (AAJ), for example.

The reason why the fine pattern 221 is formed is that when the shape memory alloy ring 220 is heated or cooled by the heating means or the cooling means as described above, a surface area is increased because of the fine pattern 221, such that a thermal diffusion speed is increased, thereby improving heating and cooling efficiency. Accordingly, an operation of clamping and unclamping the shape memory alloy ring 220 may be quickly performed.

The spacer 230 fills a gap between the shape memory alloy ring 220 and the reinforcing portion 212, and serves to prevent the shape memory alloy ring 220 from being moved away from its position. In addition, the spacer 230 also exhibits a design effect of allowing an external appearance of the tool holder 200 to be smooth and simple.

Here, since the plurality of shape memory alloy rings 220 are provided, the spacers 230 include a side spacer 231 which is interposed between the reinforcing portion 212 of the clamping portion 213 and the shape memory alloy ring 220, and a middle spacer 232 which is interposed between the shape memory alloy rings 220, and at least one middle spacer 232 may be provided.

The locking cap 240 is thread-coupled to the external thread portion 213d of the clamping portion 213 by an internal thread 241 formed on an inner circumferential surface of the locking cap 240 so as to prevent the shape memory alloy ring 220 from being moved away to the outside of the clamping portion 213. In addition, like the spacer 230, the locking cap 240 also exhibits a design effect of allowing an external appearance of the tool holder 200 to be smooth and simple.

Further, a tool groove 242, which is used to tighten and loosen the locking cap using a tool, may be formed in an outer end surface of the locking cap 240.

In addition, the locking cap 240 may be thread-coupled to the clamping portion 213 in a direction opposite to a direction in which the holder body 210 is rotated. The reason is that when the direction in which the locking cap 240 is thread-coupled to the clamping portion 213 is the same as the direction in which the holder body 210 is rotated, the thread engagement therebetween may be released, but this may be prevented by the aforementioned configuration.

Meanwhile, like the first exemplary embodiment, fine patterns 231a, 232a, and 240a may also be formed on surfaces of the spacers 230 and the locking cap 240.

### [Third exemplary embodiment]

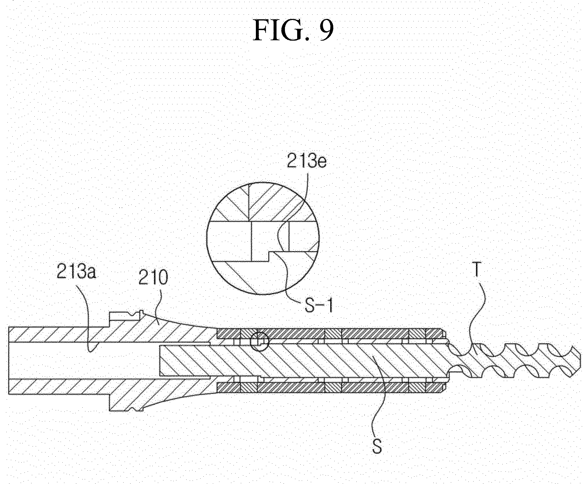

A third exemplary embodiment is similar to the second exemplary embodiment, but as illustrated in FIG. 9, the third exemplary embodiment is merely different from the second exemplary embodiment in that a stepped portion S-1 is formed at a rear side of the shank portion S of the tool T, and a catching projection 213e, by which the stepped portion S-1 is caught, is formed in the bore 213a of the holder body 210.

When the tool T is inserted into the bore 213a, the stepped portion S-1 and the catching projection 213e serve as stoppers to designate a final insertion position of the tool T, and prevent the tool T from being pressed rearward at the time of machining work.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**<Description of Symbols>**

| | |
|---|---|
| 100,200: Tool holder | 110,210: Holder body |
| 120,220: Shape memory alloy ring | 130,230: Spacer |
| 140,240: Locking cap | |

## Claims

1. A tool holder (100) using a shape memory alloy, comprising:
a holder body (110) including:
a coupling portion (111) at a rear side which is coupled to a chuck means;
a clamping portion (113) at a front side which has a bore (113a) into which a shank portion (S) of a tool (T) is inserted, a plurality of slits (113b) formed on an external circumferential surface of the clamping portion, communicating with the bore, and arranged in a circumferential direction; and
a reinforcing portion (112) in which an axial shape of an external circumferential surface between the coupling portion and the clamping portion has any one shape of a tapered shape, a two-dimensional curved line shape, and a horizontal line shape; and
a shape memory alloy ring (120) which tightens or loosens the clamping portion in a radial direction of the axis while being heated or cooled in a state in which the shape memory alloy ring is fitted on the slits (113b) of the clamping portion; **characterised in that** the clamping portion (113) of the holder body (110) has an external thread (113d) formed on a tip portion of the external circumferential surface and **in that** the tool holder further includes: a spacer (130) which is interposed between the reinforcing portion (112) of the clamping portion and the shape memory alloy ring (120); and
a locking cap (140) which is thread-coupled to the external thread portion of the clamping portion by an internal thread (141) formed on an inner circumferential surface and prevents the shape memory alloy ring from being moved away.

2. A tool holder (200) using a shape memory alloy, comprising:
a holder body (210) including:
a coupling portion (211) at a rear side which is coupled to a chuck means;
a clamping portion (213) at a front side which has a bore (213a) into which a shank portion of a tool is inserted; and
a reinforcing portion (212) in which an axial shape of an external circumferential surface between the coupling portion and the clamping portion has any one shape of a tapered shape, a two-dimensional curved line shape, and a horizontal line shape; **characterised in that** the clamping portion (213) of the holder body (210) has a plurality of slits (213b, 213c) formed on an external circumferential surface of the clamping portion, communicating with the bore, and arranged in a circumferential direction and a longitudinal direction and an external thread (213d) formed on a tip portion of the external circumferential surface and **in that** the tool holder further includes: a plurality of shape memory alloy rings (220) which tighten or loosen the clamping portion in a radial direction of the axis while being heated or cooled in a state in which the shape memory alloy ring is fitted on the respective slits formed in a longitudinal direction of the clamping portion;
spacers (230) which include a side spacer (231) interposed between the reinforcing portion of the clamping portion and the shape memory alloy ring, and one or a plurality of middle spacers (232) interposed between the shape memory alloy rings (220); and
a locking cap (240) which is thread-coupled to the external thread portion of the clamping portion by an internal thread (241) formed on an inner circumferential surface and prevents the shape memory alloy ring from being moved away.

3. The tool holder of claim 1 or 2, wherein
a fine pattern for enlarging a surface area is randomly formed on a surface of the shape memory alloy ring.

4. The tool holder of claim 3, wherein
fine patterns for enlarging surface areas are randomly formed on surfaces of the spacer and the locking cap.

5. The tool holder of claim 4, wherein
the fine pattern is formed by a processing means such as a laser or an abrasive air jet (AAJ).

6. The tool holder of claim 4, wherein
a tool groove, which is used to tighten and loosen the locking cap using a tool, is formed in an outer end surface of the locking cap.

7. The tool holder of claim 2, wherein
a stepped portion is formed at a rear side of the shank portion, and a catching projection, by which the stepped portion is caught, is formed in the bore.

8. The tool holder of claim 1 or 2, wherein
the locking cap is thread-coupled to the clamping portion in a direction opposite to a direction in which the holder body is rotated.

## Patentansprüche

1. Werkzeughalter (100), der eine Formgedächtnislegierung verwendet, umfassend:
einen Halterkörper (110), enthaltend:
einen Kopplungsabschnitt (111) an einer Rückseite, der an ein Einspannmittel gekoppelt ist;
einen Klemmabschnitt (113) an einer Vorderseite, der eine Bohrung (113a) aufweist, in die ein Schaftabschnitt (S) eines Werkzeugs (T) eingeführt wird, eine Vielzahl von Schlitzen (113b), die auf einer externen umlaufenden Oberfläche des Klemmabschnitts gebildet werden, mit der Bohrung verbunden und in eine umlaufende Richtung angeordnet; und
einen Verstrebungsabschnitt (112), bei dem eine axiale Form einer externen umlaufenden Oberfläche zwischen dem Kopplungsabschnitt und dem Klemmabschnitt irgendeine Form einer sich verjüngenden Form, einer zweidimensionalen Bogenlinienform, und einer Horizontallinienform aufweist; und
einen Formgedächtnislegierungsring (120), der den Klemmabschnitt in eine radiale Richtung der Achse festzieht oder löst, während er in einem Zustand erwärmt oder gekühlt wird, in dem der Formgedächtnislegierungsring auf den Schlitzen (113b) des Klemmabschnitts aufgesetzt ist;
**dadurch gekennzeichnet, dass** der Klemmabschnitt (113) des Halterkörpers (110) ein Außengewinde (113d) aufweist, das auf einem Spitzenabschnitt der externen umlaufenden Oberfläche gebildet wird, und dadurch, dass der Werkzeughalter weiter enthält:
ein Distanzstück (130), das zwischen dem Verstrebungsabschnitt (112) des Klemmabschnitts und dem Formgedächtnislegierungsring (120) eingesetzt ist; und
eine Verschlusskappe (140), die über ein Innengewinde (141) mit dem Außengewindeabschnitt des Klemmabschnitts durch Gewinde gekoppelt ist, welches auf einer inneren umlaufenden Oberfläche gebildet wird und den Formgedächtnislegierungsring daran hindert, weggezogen zu werden.

2. Werkzeughalter (200), der eine Formgedächtnislegierung verwendet, umfassend:
einen Halterkörper (210), enthaltend:
einen Kopplungsabschnitt (211) an einer Rückseite, der an ein Einspannmittel gekoppelt ist;
einen Klemmabschnitt (213) an einer Vorderseite, der eine Bohrung (213a) aufweist, in die ein Schaftabschnitt eines Werkzeugs eingeführt wird; und
einen Verstrebungsabschnitt (212), bei dem eine axiale Form einer externen umlaufenden Oberfläche zwischen dem Kopplungsabschnitt und dem Klemmabschnitt irgendeine Form einer sich verjüngenden Form, einer zweidimensionalen Bogenlinienform, und einer Horizontallinienform aufweist;
**dadurch gekennzeichnet, dass** der Klemmabschnitt (213) des Halterkörpers (210) eine Vielzahl von Schlitzen (213b, 213c) aufweist, die auf einer externen umlaufenden Oberfläche des Klemmabschnitts gebildet werden, mit der Bohrung verbunden, und in eine umlaufende Richtung und eine Längsrichtung angeordnet, und ein Außengewinde (213d), das auf einem Spitzenabschnitt der externen umlaufenden Oberfläche gebildet wird, und dadurch, dass der Werkzeughalter weiter enthält:
eine Vielzahl von Formgedächtnislegierungsringen (220), die den Klemmabschnitt in eine radiale Richtung der Achse festziehen oder lösen, während sie in einem Zustand erwärmt oder gekühlt werden, in dem der Formgedächtnislegierungsring auf den jeweiligen Schlitzen aufgesetzt ist, die in eine Längsrichtung des Klemmabschnitts gebildet werden;
Distanzstücke (230), die ein Seitendistanzstück (231) enthalten, das zwischen dem Verstrebungsabschnitt des Klemmabschnitts und dem Formgedächtnislegierungsring eingesetzt ist, und ein oder eine Vielzahl von Mitteldistanzstücken (232), die zwischen den Formgedächtnislegierungsringen (220) eingesetzt sind; und
eine Verschlusskappe (240), die über ein Innengewinde (241) mit dem Außengewindeabschnitt des Klemmabschnitts durch Gewinde gekoppelt ist, welches auf einer inneren umlaufenden Oberfläche gebildet wird, und den Formgedächtnislegierungsring daran hindert, weggezogen zu werden.

3. Werkzeughalter nach Anspruch 1 oder 2, wobei
eine Feinstruktur zum Erweitern eines Oberflächenbereichs zufällig auf einer Oberfläche des Formgedächtnislegierungsrings gebildet wird.

4. Werkzeughalter nach Anspruch 3, wobei
Feinstrukturen zum Erweitern von Oberflächenbereichen zufällig auf Oberflächen des Distanzstücks und der Verschlusskappe gebildet werden.

5. Werkzeughalter nach Anspruch 4, wobei
die Feinstruktur durch ein Verarbeitungsmittel, wie einen Laser oder einen Schleifluftstrahl (AAJ) gebildet wird.

6. Werkzeughalter nach Anspruch 4, wobei
eine Werkzeugnut, wie verwendet wird, um die Verschlusskappe unter Verwendung eines Werkzeugs festzuziehen und zu lösen, an einer äußeren Abschlussoberfläche der Verschlusskappe gebildet wird.

7. Werkzeughalter nach Anspruch 2, wobei
ein abgestufter Abschnitt an einer Rückseite des Schaftabschnitts gebildet wird, und ein Rastvorsprung, durch den der abgestufte Abschnitt aufgefangen wird, in der Bohrung gebildet wird.

8. Werkzeughalter nach Anspruch 1 oder 2, wobei
die Verschlusskappe in eine Richtung entgegengesetzt zu einer Richtung mit dem Klemmabschnitt durch Gewinde gekoppelt ist, in die der Halterkörper gedreht wird.

## Revendications

1. Porte-outil (100) utilisant un alliage à mémoire de forme, comprenant :
un corps de porte-outil (110) comportant :
une partie d'accouplement (111) au niveau d'un côté arrière qui est couplé à un moyen de mandrin ;
une partie de serrage (113) au niveau d'un côté avant qui a un alésage (113a) où une partie de tige (S) d'un outil (T) est insérée, une pluralité de fentes (113b) formées sur une surface circonférentielle externe de la partie de serrage, communiquant avec l'alésage, et agencées dans une direction circonférentielle ; et
une partie de renforcement (112) dans laquelle une forme axiale d'une surface circonférentielle externe entre la partie d'accouplement et la partie de serrage a une forme quelconque d'une forme conique, d'une forme de ligne incurvée bidimensionnelle, et d'une forme de ligne horizontale ; et
un anneau en alliage à mémoire de forme (120) qui resserre ou relâche la partie de serrage dans une direction radiale de l'axe tout en étant chauffé ou refroidi dans un état où l'anneau en alliage à mémoire de forme est ajusté sur les fentes (113b) de la partie de serrage ;
**caractérisé en ce que** la partie de serrage (113) du corps de porte-outil (110) a un filetage externe (113d) formé sur une partie de pointe de la surface circonférentielle externe et **en ce que** le porte-outil comporte en outre :
une entretoise (130) qui est interposée entre la partie de renforcement (112) de la partie de serrage et l'anneau en alliage à mémoire de forme (120) ; et
un capuchon de verrouillage (140) qui est couplé par filetage à la partie de filetage externe de la partie de serrage par un filetage interne (141) formé sur une surface circonférentielle intérieure et qui empêche l'anneau en alliage à mémoire de forme d'être éloigné.

2. Porte-outil (200) utilisant un alliage à mémoire de forme, comprenant :
un corps de porte-outil (210) comportant :
une partie d'accouplement (211) au niveau d'un côté arrière qui est couplé à un moyen de mandrin ;
une partie de serrage (213) au niveau d'un côté avant qui a un alésage (213a) où une partie de tige d'un outil est insérée ;
une partie de renforcement (212) dans laquelle une forme axiale d'une surface circonférentielle externe entre la partie d'accouplement et la partie de serrage a une forme quelconque d'une forme conique, d'une forme de ligne incurvée bidimensionnelle, et d'une forme de ligne horizontale ;
**caractérisé en ce que** la partie de serrage (213) du corps de porte-outil (210) a une pluralité de fentes (213b, 213c) formées sur une surface circonférentielle externe de la partie de serrage, communiquant avec l'alésage, et agencées dans une direction circonférentielle et une direction longitudinale et un filetage externe (213d) formé sur une partie de pointe de la surface circonférentielle externe et **en ce que** le porte-outil comporte en outre :
une pluralité d'anneaux en alliage à mémoire de forme (220) qui resserrent ou relâchent la partie de serrage dans une direction radiale de l'axe tout en étant chauffés ou refroidis dans un état dans lequel l'anneau en alliage à mémoire de forme est ajusté sur les fentes respectives formées dans une direction longitudinale de la partie de serrage ;
des entretoises (230) qui comportent une entretoise latérale (231) interposée entre la partie de renforcement de la partie de serrage et l'anneau en alliage à mémoire de forme, et une ou plusieurs entretoise(s) intermédiaire(s) (232) étant interposée(s) entre les anneaux en alliage à mémoire de forme (220) ; et
un capuchon de verrouillage (240) qui est couplé par filetage à la partie de filetage externe de la partie de serrage par un filetage interne (241) formé sur une surface circonférentielle intérieure et qui empêche l'anneau en alliage à mémoire de forme d'être éloigné.

3. Porte-outil de la revendication 1 ou 2, dans lequel
un motif fin pour agrandir une surface est formé de manière aléatoire sur une surface de l'anneau en alliage à mémoire de forme.

4. Porte-outil de la revendication 3, dans lequel
des motifs fins pour agrandir des surfaces sont formés de manière aléatoire sur des surfaces de l'entretoise et du capuchon de verrouillage.

5. Porte-outil de la revendication 4, dans lequel
le motif fin est formé par un moyen de traitement tel qu'un laser ou un jet d'air abrasif (AAJ).

6. Porte-outil de la revendication 4, dans lequel
une rainure d'outil, qui est utilisée pour resserrer et relâcher le capuchon de verrouillage en utilisant un outil, est formée dans une surface d'extrémité extérieure du capuchon de verrouillage.

7. Porte-outil de la revendication 2, dans lequel
une partie étagée est formée au niveau d'un côté arrière de la partie de tige, et une saillie d'accrochage, par laquelle la partie étagée est capturée, est formée dans l'alésage.

8. Porte-outil de la revendication 1 ou 2, dans lequel
le capuchon de verrouillage est couplé par filetage à la partie de serrage dans une direction opposée à une direction dans laquelle le corps de porte-outil tourne.
